# EUROPÄISCHE PATENTSCHRIFT

(11) **EP 2 166 372 B1**
(45) Veröffentlichungstag und Bekanntmachung des Hinweises auf die Patenterteilung: **31.08.2011**
(21) Anmeldenummer: 08016676.2
(22) Anmeldetag: 23.09.2008
(51) Int. Cl.: G01S 13/94, G01C 23/00

(54) **Mensch-Maschinen-Interface zur Pilotenunterstützung bei Start oder Landung eines Fluggeräts unter verminderter Außensicht**
Human-machine interface for supporting a pilot when taking off or landing an airplane in low visibility
Interface homme-machine destinée à l'assistance au pilote lors du démarrage ou de l'atterrissage d'un aéronef en cas de visibilité réduite

(43) Veröffentlichungstag der Anmeldung: 24.03.2010
(73) Patentinhaber: EADS Deutschland GmbH, 85521 Ottobrunn (DE)
(72) Erfinder: Wegner, Matthias, 88048 Friedrichshafen (DE); Münsterer, Thomas, Dr., 88069 Tettnang (DE); Kramper, Patrick, Dr., 88709 Meersburg (DE); Kielhorn, Peter, 88048 Friedrichshafen (DE)
(74) Vertreter: Meel, Thomas

(56) Entgegenhaltungen:
- EP-A- 1 906 151
- WO-A-2005/015333
- WO-A1-03/019225
- DE-A1-102004 051 625
- US-A1- 2004 225 420

## Beschreibung

Die Erfindung betrifft ein Mensch-Maschinen-Interface (MMI) zur Pilotenunterstützung bei Start und Landung eines Fluggeräts, insbesondere eines Helikopters bei verminderter Außensicht oder unter eingeschränkten Sichtbedingungen. In trockenen, wüstenartigen Gebieten (wie z.B. Afghanistan) kommt es bei fast jeder Außenlandung von Hubschraubern zu einer starken Aufwirbelung von Sand und Staub. Dies wird durch den sogenannten Down-Wash des Hauptrotors verursacht. Die Sand- bzw. Staubaufwirbelung führt oft dazu, dass der Pilot die Cockpit-Außensicht ganz oder teilweise verliert - dem so genannten Brown-Out. Durch den Verlust der Außensicht besteht für den Piloten die Gefahr des Verlustes der räumlichen Orientierung und dies insbesondere hinsichtlich Nick- und/oder Rollwinkel sowie ungewollter seitlicher Drift des Luftfahrzeugs. Zu einem ähnlichen Effekt kann es bei Landungen im Schnee kommen. Dieser Effekt wird als White-Out bezeichnet.

In der DE 10 2004 051 625 A1 ist eine Hubschrauberlandehilfe speziell für Brown-Out-Bedingungen beschrieben, bei dem während des Brown-Outs auf einem Display eine virtuelle 3D-Ansicht der Umgebung in der Perspektive des Piloten dargestellt wird, wobei die virtuelle Ansicht auf der Basis von 3D-Daten, die beim Landeanflug vor Einsetzen des Brown-Outs akkumuliert wurden, generiert wird.

In der WO 2005/015333 A2 ist ebenfalls eine Hubschrauberlandehilfe für Brown-Out Bedingungen beschrieben, die zur Pilotenunterstützung mittels unterschiedlicher Sensoren erzeugte Umgebungsinformationen und Flugzustandsdaten kombiniert und mittels Hubschrauberdatenbus laufend aktualisiert. Dabei werden die Umgebungsinformationen einerseits und Flugzustandsdaten wie Geschwindigkeit, Bewegungs- und Driftrichtung und Höhe über Grund andererseits in einem gemeinsamen Display dargestellt.

Für den Piloten notwendige, bzw. hilfreiche Kenngrößen und Informationen für einen Landevorgang unter Brown-Out Bedingungen sind:
- a): die Höhe über Grund,
- b): die Lage des Luftfahrzeugs im Raum, bzw. zum Boden,
- c): die Bewegungsrichtung und Geschwindigkeit über Grund,
- d): Änderung der Geschwindigkeit über Grund,
- e): Änderung der Höhe über Grund,
- f): die Hindernissituation am Landeplatz,
- g): die Bodenbeschaffenheit des Lande- oder Aufsetzpunktes,
- h): die Entfernung und relative Richtung zu einem zuvor selbst ausgewählten Lande- oder Aufsetzpunkt.

Wesentlich für ein universelles, operationell einsatztaugliches Brown-Out MMI ist die intuitive Vermittlung der oben angeführten Kenngrößen und Informationen an den oder die Piloten. Andererseits werden gerade in militärischen Hubschraubern eine Vielzahl an Informationen in spaltenförmigen Balken- und Zahlenkolonnen an den Piloten übermittelt. Dies kann in Situationen extremer Anspannung, wie. z.B. während des Brown-Outs, wo es auf sehr präzises und sehr schnelles Reagieren auf eine sich ändernde Flugsituation ankommt - evtl. zu Fehlinterpretationen oder gar Verwechslungen durch den Piloten führen. Aus diesem Grund muss jede Darstellung der oben angeführten Kenngrößen und Informationen in einer Form dargeboten werden, welche intuitiv ist und die Belastung des Piloten in dieser kritischen Phase der Landung minimiert.

Die WO 03/019225 A1 beschreibt ein Mensch-Maschinen-Interface zur Pilotenunterstützung bei Start oder Landung eines Fluggeräts unter verminderter Außensicht, welches ein virtuelles Szenario aus der Perspektive eines virtuellen Beobachters darstellt, der sich hinter dem Fluggerät befindet und dieselbe Fluglage aufweist wie das Fluggerät selbst, wobei das virtuelle Szenario die folgenden Komponenten aufweist:
- -: eine Darstellung des Geländes, aus einer Perspektive dargestellt, welche den momentanen Werte der Flughöhe über Grund und der momentanen Fluglage- daten des Luftfahrzeugs berücksichtigt. Die Darstellung des Geländes wird mit den momentanen Flugzustandsdaten und der momentanen Höhe über Grund kontinuierlich aktualisiert;
- -: ein Symbol für das Fluggerät, dessen Position relativ zum dargestellten Gelän- de die aktuelle Fluglage sowie die momentane Höhe über Grund des Fluggeräts darstellt.

EP 1 906 151 A2 beschreibt ebenfalls ein Mensch-Maschinen-Interface zur Pilotenunterstützung bei Start und Landung, welches ein virtuelles Szenario aus der Perspektive eines virtuellen Beobachters darstellt, der sich hinter dem Fluggerät befindet. Dargestellt wird eine idealisierte Bodenfläche im Bereich des vorgesehenen Landeplatzes, wobei der virtuelle Beobachter eine feste Fluglage bezüglich der dargestellten idealisierten Bodenfläche aufweist.

Der Erfindung liegt die Aufgabe zugrunde, ein Mensch-Maschinen-Interface für Piloten so zu verbessern, das dem Piloten bei einer Brown-Out- oder White-Out-Landung eine optimierte intuitive Unterstützung bei der räumlichen Orientierung bietet und somit eine sichere Landung auch und insbesondere in diesen Extremsituationen ermöglicht.

Diese Aufgabe wird mit dem Gegenstand des Patentanspruch 1 gelöst. Vorteilhafte Ausführungen sind Gegenstand von Unteransprüchen.

Das erfindungsgemäße Mensch-Maschinen-Interface ist in der Lage, ein virtuelles Szenario aus der Perspektive eines virtuellen Beobachters darzustellen, der sich hinter dem Fluggerät befindet und dieselbe Fluglage aufweist, wie das Fluggerät selbst. Das virtuelle Szenario weist die folgenden Komponenten auf:
- -: eine Basisebene, welche eine idealisierte Bodenfläche symbolisiert, berechnet aufgrund des momentanen Wertes der Flughöhe über Grund und der momen- tanen Fluglagedaten. Die Basisebene wird durch einen künstlichen Horizont be- grenzt und wird mit den momentanen Flugzustandsdaten und der momentanen Höhe über Grund kontinuierlich aktualisiert,
- -: ein Symbol für das Fluggerät, dessen Position und Lage relativ zur Basisebene die tatsächliche, momentane Fluglage und Höhe über Grund (AGL) des Flugge- räts darstellt,
- -: wobei die momentane Driftgeschwindigkeit und Driftrichtung über Grund des Fluggeräts durch perspektivische Projektion des Driftvektors (D) in die Basis- ebene (BE) oder einer hierzu parallelen Ebene dargestellt wird.

Durch diese Darstellung wird dem Piloten insbesondere die Kontrolle der Fluglage hinsichtlich Nick- und Rolllage wesentlich erleichtert und er erhält gleichzeitig einen Eindruck von der Höhe über Grund.

In die Basisebene oder einer hierzu parallelen Ebene können in vorteilhaften Ausführungen weitere Anzeigen projiziert werden:
- -: AGL-Indikator zur Visualisierung der momentanen Flughöhe über Grund,
- -: Schatten des Fluggeräts (basierend auf der Basis des aktuellen Sonnenstands oder einer fixen virtuellen Lichtquelle) zur zusätzlichen Visualisierung der momen- tanen Höhe über Grund,
- -: Gefahrensektor auf oder über der Basisebene zur Visualisierung von stationären oder sich bewegenden Hindernissen innerhalb des Sicherheitsbereiches der Landezone,
- -: vorgesehener Landeplatz oder Aufsetzpunkt, der vor dem Einsetzen des Brown-Outs durch numerische Positionseingabe oder mittels Helmsichtgerät, Fluglagedaten und einem digitalen Trigger ausgewählt wurde, und der in der Basisebene fortlaufend und positionsgenau dargestellt wird. In einer besonders vorteilhaften Ausführung können die 3D-Daten der Landezone in die Berechnung des Landesplatzes oder Aufsetzpunktes mit einbezogen werden.

Damit stehen dem Piloten alle wichtigen Flug-, Hindernis- und Geländeinformationen innerhalb der Landezone in konzentrierter Form zur Verfügung, und er muss seine Aufmerksamkeit nicht auf verschiedene Anzeigegeräte oder Bildschirme aufteilen.

Der Eindruck von der momentanen Flughöhe kann weiter verstärkt werden, in dem fortlaufend ein Lot vom Fluggerät auf die Basisebene dargestellt wird.

In einer weiteren Ausführung wird der Basisebene eine dreidimensionale Darstellung der realen topographischen Geländeoberfläche (insbesondere bezüglich der Gegebenheiten vor, seitlich sowie unter dem Fluggerät) auf der Basis von hochauflösenden 3D-Daten überlagert.

Das erfindungsgemäße Anzeigekonzept ist in der Lage, den räumlichen Orientierungsverlust im Brown-Out-Fall zu verhindern und zusätzlich eine Beurteilung des angestrebten Landeplatzes oder Aufsetzpunktes zu erlauben. Fluglage, Höhe über Grund und darüber hinaus auch momentane Driftgeschwindigkeit und -richtung werden konzentriert, in einer für den Piloten intuitiv nachvollziehbaren Weise dargestellt. Es stellt dem Piloten eine universelle, operationell einsatztaugliche Hilfestellung für Hubschrauberlandungen speziell unter Brown-Out-Bedingungen zur Verfügung. Das erfindungsgemäße MMI basiert auf der Verwendung mehrerer Sensoren (Fluglage- und Navigationssystem, ein oder mehrere Radarhöhenmesser und/oder Laserhöhenmesser) als Basiskonfiguration sowie zusätzliche laserbasierte Ladarsysteme, Video- bzw. FLIR-Kameras und/oder staubdurchdringende Radarsysteme als auch digitalen 3D-Terrain- und Hindemisdatenbanken als Option).

Die Erfindung wird anhand konkreter Ausführungsbeispiele unter Bezugnahme auf Figuren näher erläutert. Sie zeigen:
- Fig. 1: eine Basisebene als eine Komponente des virtuellen Szenarios, das von dem erfindungsgemäßen MMI dargestellt wird;
- Fig. 2: eine mögliche Ausprägung des virtuellen Szenarios mit der Basisebene BE, wie es von dem erfindungsgemäßen MMI dargestellt wird; die zugehörige Fluglage des Luftfahrzeugs ist zum Vergleich rechts unten dargestellt;
- Fig. 3: ein virtuelles Szenario mit perspektivischer Darstellung des Driftvektors D zur Anzeige der momentanen Driftgeschwindigkeit und relativen Driftrich- tung über Grund;
- Fig. 4: ein virtuelles Szenario mit Darstellung des Lots vom Luftfahrzeug auf die Basisebene BE zur Visualisierung der momentanen Flughöhe über Grund;
- Fig. 5: ein virtuelles Szenario in zwei Momentaufnahmen mit Darstellung eines Fluggerät-Schattens auf der Basisebene als zusätzliche Unterstützung der Visualisierung der Flughöhe und der räumlichen Orientierung;
- Fig. 6: ein virtuelles Szenario mit Darstellung eines Gefahrensektors auf der Basisebene zur Visualisierung von sich bewegenden oder stationären Hindernissen innerhalb der Landezone;
- Fig. 7: eine Überlagerung der Basisebene mit der Darstellung der realen topographischen Bodenfläche auf der Basis von detaillierten 3D-Daten,
- Fig. 8: eine mögliche Ausprägung des virtuellen Szenarios mit einer der Basisebene überlagerten Darstellung der realen Umgebung der Landezone auf der Basis von 3D-Daten.

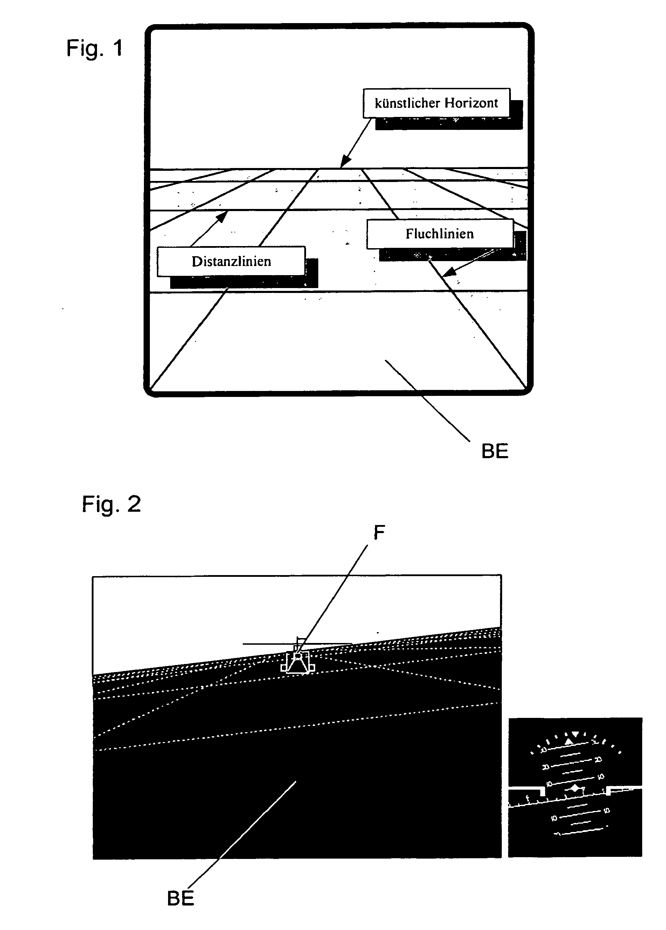

Fig. 1 zeigt eine Basisebene BE als eine wesentliche Komponente des virtuellen Szenarios. Sie stellt die idealisierte Oberfläche der Landeebene dar. Begrenzt wird die Basisebene BE durch den künstlichen Horizont, welcher prinzipiell die gleiche Funktionalität wie ein Fluglageanzeiger im Cockpit besitzt. Dies ist von wesentlicher Bedeutung für das erfindungsgemäße Darstellungskonzept, da durch den künstlichen Horizont und die mit ihm verbundene Basisebene BE der Pilot unmittelbar alle Fluglageänderungen bezüglich Nick- und/oder Rollwinkel leicht und intuitiv ablesen kann. Zur Verbesserung des räumlichen Eindrucks, der besseren Einschätzung der momentanen Fluglage sowie der qualitativen Flughöhe über Grund können auf der

Basisebene zusätzlich Flucht- und Distanzlinien eingezeichnet werden, die den Eindruck der räumlichen Tiefe der Basisebene BE verstärken. Der räumliche Eindruck des virtuellen Szenarios - insbesondere bezüglich der Abschätzung der Flughöhe über Grund - kann nochmals erhöht werden, wenn die Basisebene BE ganz bzw. teilweise mit einem sog. Schachbrettmuster (siehe Fig. 2) oder einer graphischen Bodentextur (gewonnen z.B. aus den Daten einer Videokamera unmittelbar vor dem Brown-Out) oder beidem belegt wird.

Alle graphischen Elemente der Basisebene BE werden mit Hilfe der momentanen Flugzustandsdaten (Fluglage) sowie der aktuellen Höhe über Grund (AGL) aktualisiert. Damit wird sichergestellt, dass alle Änderungen von Fluglage und Höhe über Grund unmittelbar eine entsprechende Änderung in der Graphik-Anzeige der Basisebene BE nach sich ziehen.

Fig. 2 zeigt eine mögliche Ausprägung des virtuellen Szenarios mit der Basisebene BE, wie es von dem erfindungsgemäßen MMI dargestellt wird. Eine entsprechende Darstellung der Fluglage des Luftfahrzeugs ist, rechts unten in dem separaten Diagramm ebenfalls eingezeichnet. Das virtuelle Szenario zeigt ein Symbol F für das Fluggerät über der Basisebene BE, dargestellt aus Sicht eines virtuellen Beobachters, der sich hinter dem Fluggerät befindet. Er weist dieselbe Fluglage, wie das Fluggerät auf. Man kann sich den Beobachter als starr mit dem Fluggerät verbunden vorstellen. Der Pilot sieht also sein Fluggerät von hinten über der Basisebene BE unter Berücksichtigung der momentanen Flugzustandsdaten fliegen. Diese Darstellung erlaubt eine sehr intuitive Einschätzung des Nick- und Rollwinkels des Fluggeräts sowie der Höhe über Grund.

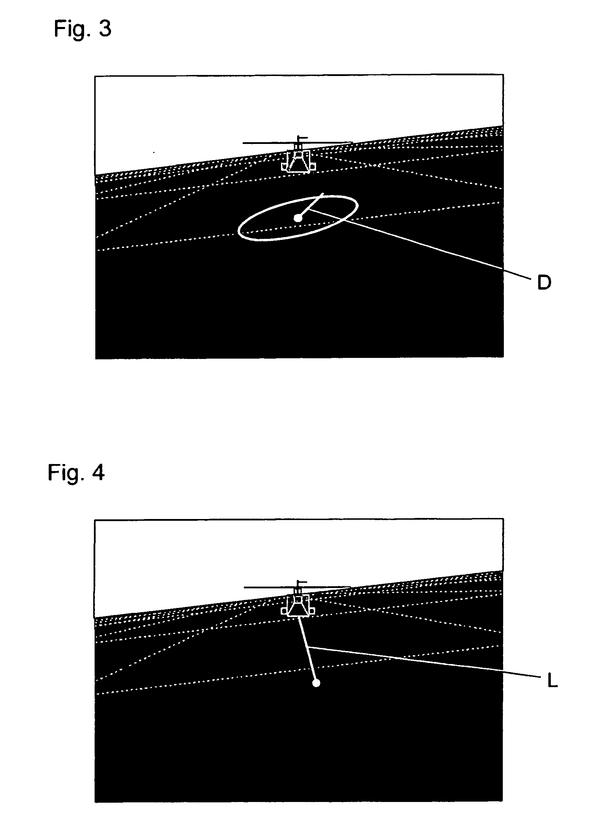

Erfindungsgemäß wird die Darstellung der Driftgeschwindigkeit und -richtung (Driftvektor) über Grund einbezogen (Fig. 3). Die Eingangsdaten zur Darstellung werden einem Fluglage- und Navigationssystem entnommen. Die Driftinformation wird als perspektivische Projektion des Driftvektors in die virtuelle Basisebene dargestellt. Dabei wird die laterale sowie die longitudinale Vektorkomponente der Geschwindigkeit über Grund in Bezug auf das Luftfahrzeug vektoriell als Linie oder Pfeil veränderlicher Länge dargestellt. Die momentane Darstellungslänge des Driftvektors D innerhalb des virtuellen Szenarios ist proportional zur Geschwindigkeit in der horizontalen Ebene und entspricht zu jedem Zeitpunkt der tatsächlichen Driftgeschwindigkeit und - richtung des Luftfahrzeugs über Grund. Zur besseren Orientierung kann zusätzlich die perspektivische Projektion eines Kreises auf die Basisebene BE eingeblendet werden, dessen Radius einer vorher festgesetzten Driftgeschwindigkeit (z.B. 10 knots) entspricht und dessen Mittelpunkt der Ursprung des Driftvektors D ist. Ein Beispiel für einen solchen Kreis auf der Basisebene BE ist in Fig. 3 ebenfalls dargestellt.

Eine weitere Funktionalität des erfindungsgemäßen MMI ist die Darstellung der aktuellen Höhe über Grund. Diese wird einerseits bereits implizit durch die Darstellung des Fluggeräts über der Basisebene BE gezeigt und kann durch die zusätzliche Darstellung eines Lots L (Fig. 4) vom Luftfahrzeug auf der Basisebene BE ergänzt werden, wobei das Lot dann vom Fluggerät zu dessen lotrechtem Fußpunkt auf der Basisebene BE verläuft.

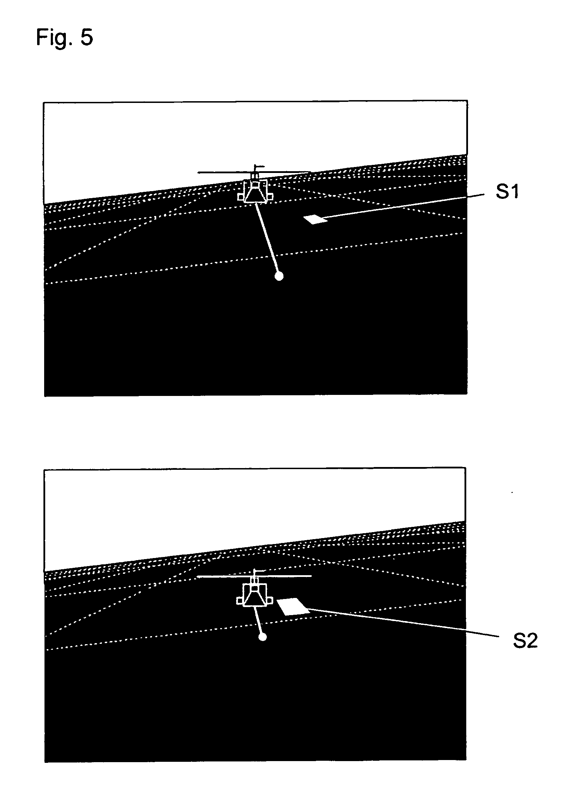

Ein weiteres intuitives Konzept, um dem Piloten eine Einschätzung für die Höhe über Grund zu geben, ist die Darstellung eines virtuellen Schattenwurfs des Fluggeräts auf der Basisebene BE. Die Lichtquelle kann dabei entweder fix hinter dem Luftfahrzeug angenommen werden (z.B. in 45° Azimut und 45° Elevation) oder aus dem realen Sonnenstand, entsprechend GPS-Position und Datum, berechnet werden. Fig. 5 zeigt ein solches Szenario in zwei Momentaufnahmen bei unterschiedlicher Höhe über Grund. Die zugehörigen Schattenwürfe sind mit S1, S2 bezeichnet. Vermindert sich die Höhe über Grund, rückt der Schatten näher zum Fußpunkt des Lots. Ob das Lot dabei dargestellt wird oder nicht ist optional.

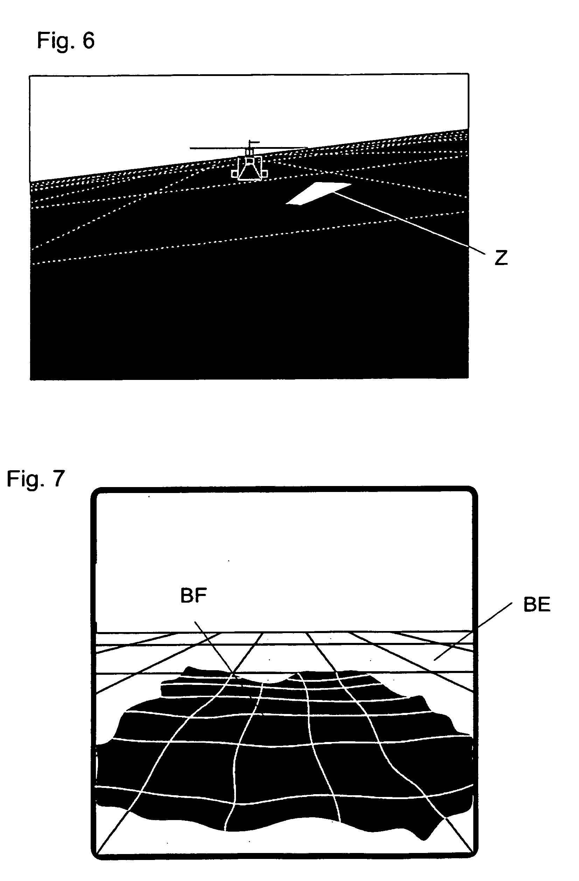

Die aktuellen Sensor-Konzepte für Brown-Out-Rettungssysteme gehen davon aus, dass ein notwendiger Sensor ein staubdurchdringender Radarsensor ist. Die räumliche Auflösung dieser Sensoren ist i.d.R. jedoch eher grob (Auflösung in Azimut Richtung ≥ 2°). Sie werden deshalb als reine Warnsysteme eingesetzt, die darstellen sollen, wenn sich gefährliche Hindernisse während des Brown-Outs in den Landebereich hineinbewegen oder sich das Fluggerät auf solche Hindernisse durch unbeabsichtigte Drift innerhalb der Staubwolke zu bewegt. Derartige Radarsensoren werden in der Literatur auch als Electronic Bumper (elektronische Stoßstange) bezeichnet. Die mit diesen Radarsensoren gewonnenen Informationen können in einer vorteilhaften Ausführung der Erfindung in die Darstellung integriert werden (siehe Fig. 6). Die vorgeschlagene Darstellung zur aktiven Warnung vor Hindernissen in der Landezone kann funktional ähnlich der einer Einparkhilfe beim Auto aufgebaut sein. Es wird die räumliche Projektion eines bestimmten Sektors Z auf der Basisebene BE, in dem ein Objekt detektiert wurde, farblich hervorgehoben (Gefahrensektoranzeige). Als laterale Auflösung bieten sich z.B. 4, 8 oder 16 Sektoren an. Da der Electronic Bumper i.d.R. keine oder wenig Information über die tatsächliche Höhe des Hindernisses gibt und es durch Projektion zu einer Unsicherheit in der Entfernungsmessung kommt, wird die Entfernungsdarstellung in eine geringe Anzahl an diskreten Entfernungsstufen aufgeteilt (z.B. 3 bis 4 Entfernungsstufen: Entfernung zwischen aktueller Position und 1/2 Rotordurchmesser, zwischen ½ und 1 Rotordurchmesser, zwischen 1 und 2 Rotordurchmesser, mehr als 2 Rotordurchmesser). Für Hindernisse, die näher als ein vorgegebenes Vielfaches/Bruchteil des Rotordurchmessers sind, kann zusätzlich eine akustische Warnung ausgegeben werden.

Besitzt das Brown-Out-Rettungssystem einen hoch auflösenden, nach vorn schauenden 3D-Sensor oder besitzt es alternativ Zugriff auf eine digitale 3D-TerrainDatenbank und weist der Hubschrauber außerdem ein Helmsichtsystem (HMS/D) auf, so kann der konkrete Landeplatz oder Aufsetzpunkt in der Phase vor einem möglichen Brown-Out durch den Piloten optisch anvisiert, ausgewählt und in der Darstellung auf der Basisebene BE positionsgenau angezeigt werden. Um dies zu erreichen, müssen die 3D-Daten des Bereichs vor dem Hubschrauber vorliegen, das Sichtfeld (FOV) des HMS/D bekannt sein und ein digitaler Triggereingang zur Verfügung stehen. Zur Markierung des Landeplatzes oder Aufsetzpunktes fokussiert der Pilot diesen Ort in der Landezone mit dem HMS/D in dem er ihn durch das Cockpitfenster anvisiert und dann den digitalen Trigger betätigt. Aus den aktuellen Fluglagewinkeln des Fluggeräts und dem FOV des HMS/D ergibt sich ein Richtungsvektor im Raum. Am Schnittpunkt dieses Vektors mit der mittels des 3D-Sensors oder der 3D-Terraindatenbank ermittelten Bodenfläche BF liegt der Lande-oder Aufsetzpunkt. Dieser Landepunkt kann wiederum als Markierung auf der Basisebene BE oder der Bodenfläche BF des virtuellen Szenarios dargestellt werden, wodurch im weiteren selbst in der dichtesten Brown-Out Staubwolke eine punktgenaue Landung ermöglicht wird. Ist das reale Gelände der Landezone hinreichend eben und nicht geneigt oder wurde eine Neigung durch die Auswertung mehrerer Höhensensoren am Luftfahrzeug berechnet, dann ist für die ortsgenaue Markierung des Lande- oder Aufsetzpunktes das Vorhandensein eines 3D-Sensors oder einer 3D-Terraindatenbank nicht notwendig. Die Basisebene BE entspricht in diesem Falle der realen Bodenfläche und kann direkt für die beschriebene Markierung des Landepunktes benutzt werden.

Besitzt das Brown-Out-Rettungssystem einen hoch auflösenden nach vorn schauenden 3D-Sensor (d.h. einen Entfernungsbildsensor) und/oder hat es Zugriff auf die Informationen einer digitalen 3D-Terrain- und Hindernisdatenbank, so kann eine 3D-Darstellung des realen topographischen Geländes und aller Nicht-Boden-Objekte als weitere Darstellungsschicht der Basisebene BE überlagert werden. Fig. 7 zeigt hierzu ein Beispiel, bei dem der Basisebene BE eine Darstellung der realen Bodenfläche BF auf der Basis von 3D-Daten überlagert ist.

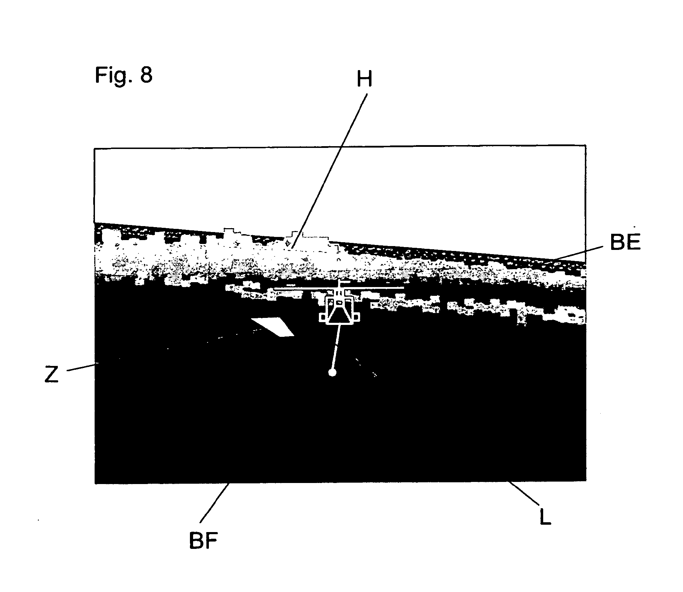

In Fig. 8 ist ein virtuelles Szenario mit Basisebene BE dargestellt, der eine reale topographische Bodenfläche BF mit erhabenen Nicht-Boden-Objekten (Hindernissen) H in der Umgebung der Landezone überlagert ist. Die Bodenfläche BF und die Hindernisse sind höhenkodiert dargestellt, d.h. die Farben/Graustufen in der Darstellung entsprechen den Objekthöhen in Relation zur Bodenfläche. Aufgrund der erfindungsgemäßen Visualisierung der Bodenfäche BF aus der Perspektive eines nachfolgenden Beobachters wird hierbei u.a. auch großzügig der Bereich links/rechts sowie unter dem Fluggerät dargestellt. Zusätzlich ist in Fig. 8 ein Lot L auf die Bodenfläche BF sowie ein Gefahrensektor Z aufgrund vorhandener Hindernisse veranschaulicht.

Alle graphischen Elemente der 3D-Darstellung des virtuellen Szenarios werden mit Hilfe der momentanen Flugzustandsdaten (Fluglage und -geschwindigkeit) sowie der momentanen Höhe über Grund aktualisiert. Damit wird sichergestellt, dass alle Änderungen von Fluglage, Fluggeschwindigkeit, Driftrichtung und Höhe über Grund unmittelbar und ohne merkbare zeitliche Verzögerung eine entsprechende Änderung in der 3D-Darstellung des virtuellen Szenarios nach sich ziehen. Es entsteht eine Art "Virtual-Reality" Eindruck - gerade so, als ob gar keine Sichtbehinderung durch den Staub während des Brown-Outs bestünde. Dieses MMI-Konzept vermittelt in Kombination verschiedener Einzelkomponenten dem Piloten ein sehr intuitives und natürliches Verständnis über die momentane Flugsituation als auch einen sehr realitätsnahen Eindruck über die tatsächlichen Verhältnisse in und um die Landezone.

Für die räumliche Orientierung des Piloten sowie für die Fluglage-, Drift- und Höhenkontrolle des Fluggeräts im Brown-Out-Fall spielt die Darstellung des virtuellen Szenarios eine bedeutende Rolle. Faktisch ersetzt diese Darstellung für den Piloten die fehlende Cockpit-Außensicht im Brown-Out Fall.

Die 3D-Informationen für die Bodenfläche BF und für die Nicht-Bodenobjekte H können entweder von einem Radar, einem Ultraschall-System, einem laserbasierten Ladar oder anderen geeigneten aktiv messenden Systemen im Luftfahrzeug stammen. Ebenso können diese 3D-Informationen aus hoch aufgelösten 3D-Terrain- und Hindernisdatenbanken entnommen und dargestellt werden.

Ein besonders geeignetes System zur Erfassung der für das vorgeschlagene Brown-Out MMI notwendigen 3D-Daten ist z.B. das Helikopter-Laser-Radar HELLAS^{®} der Firma EADS Deutschland GmbH.

## Patentansprüche

1. Mensch-Maschinen-Interface, welches zur Pilotenunterstützung bei Start oder Landung eines Fluggeräts unter verminderter Außensicht ein virtuelles Szenario aus der Perspektive eines virtuellen Beobachters darstellt, der sich hinter dem Fluggerät befindet und dieselbe Fluglage aufweist wie das Fluggerät selbst, wobei das virtuelle Szenario die folgenden Komponenten aufweist:
- eine Basisebene (BE), berechnet aufgrund des momentanen Wertes der Flughöhe über Grund und der momentanen Fluglagedaten des Fluggerät; die Basisebene (BE) wird mit den momentanen Flugzustandsdaten und der momentanen Höhe über Grund kontinuierlich aktualisiert;
- ein Symbol (F) für das Fluggerät, dessen Position relativ zur Basisebene (BE) die aktuelle Fluglage sowie die momentane Höhe über Grund des Fluggeräts darstellt,
**dadurch gekennzeichnet, dass**
- die Basisebene (BE) eine idealisierte Bodenfläche symbolisiert, und durch einen künstlichen Horizont begrenzt wird;
- in dem virtuellen Szenario die momentane Driftgeschwindigkeit und Driftrichtung über Grund des Fluggeräts durch perspektivische Projektion des Driftvektors (D) in die Basisebene (BE) oder einer hierzu parallelen Ebene dargestellt wird.

2. Mensch-Maschinen-Interface nach dem vorangehenden Anspruch, **dadurch gekennzeichnet, dass** in dem virtuellen Szenario ein Lot (L) vom Fluggerät auf die Basisebene (BE) dargestellt wird.

3. Mensch-Maschinen-Interface nach einem der vorangehenden Ansprüche, **dadurch gekennzeichnet, dass** in dem virtuellen Szenario der Schatten (S1,S2) des Fluggeräts auf der Basisebene (BE) dargestellt wird.

4. Mensch-Maschinen-Inferface nach Anspruch 3, **dadurch gekennzeichnet, dass** der Schatten auf der Basis des aktuellen Sonnenstands oder auf der Basis der fixen Position einer virtuellen Lichtquelle dargestellt wird.

5. Mensch-Maschinen-Interface nach einem der vorangehenden Ansprüche, **dadurch gekennzeichnet, dass** detektierte, sich bewegende oder statische Hindernisse in dem virtuellen Szenario durch perspektivische Projektion eines Gefahrensektors (Z), innerhalb dessen sich ein solches Hindernis befindet, auf der Basisebene (BE) oder einer hierzu parallelen Ebene dargestellt werden.

6. Mensch-Maschinen-Interface nach einem der vorangehenden Ansprüche, **dadurch gekennzeichnet, dass** in dem virtuellen Szenario die mittels Helmsichtgerät, digitalem Trigger und Fluglagedaten sowie evtl. 3D-Daten des Landegeländes ermittelte Position eines vorgesehenen Landepunkts auf der Basisebene (BE) dargestellt wird.

7. Mensch-Maschinen-Interface nach einem der vorangehenden Ansprüche, **dadurch gekennzeichnet, dass** der Basisebene (BE) eine dreidimensionale Darstellung der realen Umgebung der Landezone mit topographischer Bodenfläche (BF) und Nicht-Boden-Objekten (H) auf der Basis von 3D-Daten überlagert ist.

## Claims

1. Manned machine interface which, for pilot assistance during take-off or landing of an airborne vehicle in reduced external visibility, represents a virtual scenario from the perspective of a virtual observer who is himself located behind the airborne vehicle and is in the same flight attitude as the airborne vehicle itself, with the virtual scenario having the following components:
- a base plane (BE) calculated from the instantaneous value of the altitude above ground and the instantaneous flight attitude data of the airborne vehicle; the base plane (BE) is continuously updated with the instantaneous flying state data and the instantaneous height above ground;
- a symbol (F) for the airborne vehicle, whose position relative to the base plane (BE) represents the current flight attitude and the instantaneous height of the airborne vehicle above ground, **characterized in that**
- the base plane (BE) symbolizes an idealized ground surface and is bounded by an artificial horizon;
- the instantaneous drift rate and drift direction above ground of the airborne vehicle are represented in the virtual scenario by perspective projection of the drift vector (D) onto the base plane (BE) or onto a plane parallel to it.

2. Manned machine interface according to the preceding claim, **characterized in that** a vertical (L) from the airborne vehicle to the base plane (BE) is represented in the virtual scenario.

3. Manned machine interface according to one of the preceding claims, **characterized in that** the shadow (S1, S2) of the airborne vehicle on the base plane (BE) is represented in the virtual scenario.

4. Manned machine interface according to Claim 3, **characterized in that** the shadow is represented on the basis of the current time of day or on the basis of the fixed position of a virtual light source.

5. Manned machine interface according to one of the preceding claims, **characterized in that** detected, moving or static obstructions are represented in the virtual scenario by a perspective projection of a danger sector (Z), within which an obstruction such as this is located, on the base plane (BE) or on a plane parallel to it.

6. Manned machine interface according to one of the preceding claims, **characterized in that** the position determined by means of a helmet mounted sight, a digital trigger and flight attitude data, possibly as well as 3D data of the terrain of the land, of an intended landing point on the base plane (BE) is represented in the virtual scenario.

7. Manned machine interface according to one of the preceding claims, **characterized in that** the base plane (BE) has superimposed on it a three-dimensional representation of the actual area surrounding the landing zone, with a topographical ground surface (BF) and non-ground objects (H) on the basis of 3D data.

## Revendications

1. Interface homme-machine représentant, pour l'assistance d'un pilote lors du décollage ou de l'atterrissage d'un aéronef par visibilité réduite, un scénario virtuel depuis la perspective d'un observateur virtuel qui se trouve à l'arrière de l'aéronef et qui présente la même attitude de vol que l'aéronef lui-même, dans lequel le scénario virtuel comprend les composants suivantes :
- un plan de base (BE) calculé sur la base de la valeur instantanée de l'altitude au-dessus du sol et de données d'attitude de vol instantanées de l'aéronef ; le plan de base (BE) étant actualisé en continu avec les données d'état de vol instantanées et l'altitude au-dessus du sol ;
- un symbole (F) pour l'aéronef, dont la position par rapport au plan de base (BE) représente l'attitude de vol effective ainsi que la hauteur instantanée de l'aéronef au-dessus du sol,
**caractérisé en ce que** :
- le plan de base (BE) symbolise une surface au sol idéalisée et est délimité par un horizon artificiel ;
- dans le scénario virtuel, la vitesse de dérive et la direction de dérive instantanées de l'aéronef au-dessus du sol sont représentées par une projection en perspective du vecteur de dérive (D) dans le plan de base (BE) ou dans un plan parallèle à celui-ci.

2. Interface homme-machine selon la revendication précédente, **caractérisée en ce que**, dans le scénario virtuel, un nadir (L) de l'aéronef sur le plan de base (BE) est représenté.

3. Interface homme-machine selon l'une des revendications précédentes, **caractérisée en ce que**, dans le scénario virtuel, l'ombre (S1, S2) de l'aéronef sur le plan de base (BE) est représentée.

4. Interface homme-machine selon la revendication 3, **caractérisée en ce que** l'ombre est représentée sur la base de la position effective du soleil ou sur la base de la position fixe d'une source de lumière virtuelle.

5. Interface homme-machine selon l'une des revendications précédentes, **caractérisée en ce que** des obstacles mobiles ou statiques sont représentés dans le scénario virtuel par une projection en perspective d'un secteur à risque (Z) à l'intérieur duquel se trouve un tel obstacle, sur le plan de base (BE) ou sur un plan parallèle à celui-ci.

6. Interface homme-machine selon l'une des revendications précédentes, **caractérisée en ce que**, dans le scénario virtuel, la position d'un point d'atterrissage prévu sur le plan de base (BE), obtenue au moyen d'un viseur de casque, d'un déclencheur numérique et de données de vol ainsi qu'éventuellement de données tridimensionnelles du terrain d'atterrissage, est représentée.

7. Interface homme-machine selon l'une des revendications précédentes, **caractérisée en ce qu'**une représentation tridimensionnelle de l'environnement de la zone d'atterrissage est superposée au plan de base (BE) avec des étendues de terrain topographiques (BF) et des objets ne faisant pas partie du terrain (H) sur la base de données tridimensionnelles.
